(19) Europäisches Patentamt
European Patent Office
Office européen des brevets

(11) **EP 3 496 039 A1**

(12) **EUROPEAN PATENT APPLICATION**

(43) Date of publication:
**12.06.2019 Bulletin 2019/24**

(51) Int Cl.:
***G06T 7/73*** *(2017.01)*          ***G06T 7/20*** *(2017.01)*

(21) Application number: **17306722.4**

(22) Date of filing: **07.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **BAILLARD, Caroline**
  **35576 Cesson-Sévigné (FR)**
• **SERVANT, Fabien**
  **35576 Cesson-Sévigné (FR)**
• **JOUET, Pierrick**
  **35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **METHOD, DEVICE AND SYSTEM FOR ESTIMATING A POSE OF A CAMERA**

(57)     A method for determining a pose estimation of a camera in an environment including a display for moving pictures comprises:
- obtaining (10) reference frames corresponding in a synchronized way to at least part of at least some of multiple displayed frames displayed on said display;
- obtaining (20) image data from images of said displayed frames captured with said camera by shooting said display;
- determining (30) said pose estimation from correlating at time steps said image data and said reference frames.
    Corresponding device, and applications to augmented reality

Figure 2

**Description**

**1. Technical field**

The present disclosure relates to the field of video processing. More specifically, the present disclosure relates to computer vision. More particularly, the methods and devices proposed in the present disclosure are adapted for estimating a localization of a device during shooting.

**2. Background**

Precise system localization is a major requirement for numerous applications including augmented reality, mixed reality, artificial intelligence and user interaction. Precise position and orientation estimation requires the use of exteroceptive sensors which are observing the environments. A camera is one example of such sensor which is broadly available on many devices. But, performing localization using a camera requires the environment to be rich in visual information. In many scenarios stable visual information is scarce and an opportunistic behavior is needed.

Classic visual localization pipelines are always based on the fact that observed environment does not change. More specifically, usually, a reference frame must be known a priori to enable offline edition of the augmented reality scenario. This means that either the environment is known or some fixed recognizable object (with a known pose) is visible in the camera point of view, so that the processing may be done in view of this fixed recognizable object. Hence, production grade augmented reality systems are using planar recognizable objects known as markers. These markers are designed to be easily recognizable by a camera sensor (their content is unique and texture-rich) and are typically printed on sheets of papers. This is orthogonal to the described display behavior. Using the display static features (e.g. TV borders) is, for most displays, too poor to provide a good localization.

Hence, several solutions exist, based on static templates, and work for known situations, where the static template is visible and where the static template may be easily recognized among the other objects of the scene. However, the first problem of these solutions is the necessity of having these static templates: this is not convenient for a home use of these solutions because the user needs to position these templates before using the augmented reality application, which may lead to a quite deceptive experience.

Additionally, in many scenarios, including living room usage (moreover in dark lighting conditions), these static templates are either not correctly perceived or not perceived at all. This implies that the augmented reality application will not work properly or not work at all.

Thus, since displays are an important source of visual information in modern indoor environments, they should be used if possible, so as to ease the localization. Additionally, in some scenarios, the user is directly interested in the display localization. In such case, being able to use the display visual information is optimal. Displayed visual information is dynamic and not predictable without additional information (Its content is not generated using a known generative model).

Thus, there's a need for having a real-time display based localization method and device which do not have these drawbacks of prior art techniques.

**3. Summary**

The disclosure allows solving at least some of the prior art drawbacks. More specifically, the method, device and system of the present disclosure allow obtaining camera pose estimation without using static templates like in prior art solutions.

More specifically, it is disclosed a method for determining a localization of a camera in an environment including a display for moving pictures. According to the disclosure, the method comprises:

- Obtaining a latency time by temporally synchronizing (10) reference frames corresponding to at least part of at least some of multiple displayed frames displayed on said display,
- Obtaining an initial localization by detecting (20) a predetermined pattern from images of said displayed frames captured with said camera by shooting said display, as a function of said latency time; and
- tracking said localization from correlating at time steps image data from images of said displayed frames captured with said camera by shooting said display and said reference frames, as a function of a previously determined localization.

Thus the method allows obtaining a smooth localization of a camera within an environment by staging the localization with ordered step for managing the difficult aspects of the processing easily.

According to the disclosure, said localization of said camera is obtained by applying a rigid transformation to images of said displayed frames captured with said camera by shooting said display.

According to the disclosure, said localization is combined with watermarking at least one of said reference frames.

Thus, the synchronization step can use the watermarked information of obtaining the necessary data (e.g for example the frame number).

According to the disclosure, said temporally synchronizing reference frames corresponding to at least part of at least some of multiple displayed frames displayed on said display comprises:

- obtaining at least a piece of data representing reference frame numbers associated with said reference frames;

- determining, from images of said displayed frames captured with said camera by shooting said display, shot frame numbers;
- obtaining said latency time as a function of reference frame numbers and shot frame numbers.

According to the disclosure, obtaining said latency time comprises minimizing:

$$argmin\ n_0 + (t_1 - b) * f - k$$

Where

- $n_0$ represents the number of a reference frame;
- $k$ is the shot frame number;
- $t_1$ is the timestamp at which said frame is captured by the camera;
- $f$ if the framerate of the content being displayed on said display;
- $b$ is the estimated value of the latency time.

According to the disclosure said predetermined pattern takes the form of a color thick rectangle overlaying frames displayed on said display.

According to the disclosure, detecting a predetermined pattern from images of said displayed frames captured with said camera by shooting said display comprises, for a current image of said images of said displayed frames captured with said camera :

- seeking at least one predetermined pattern in said current image;
- extracting, in said current image, a piece of image comprised inside said pattern;
- determining said frame number of said current image;
- obtaining at least one piece of a reference frame associated with said frame number;
- comparing said at least one piece of a reference frame with said a piece of image comprised inside said pattern, delivering a matching score; and
- when said matching score exceeds a predetermined threshold, determining said initial localization of said camera within said environment.

According to the disclosure, said step for obtaining at least one piece of a reference frame associated with said frame number comprise obtaining, in a buffer memory, a thumbnail of a reference frame tagged for said frame number, among a set of thumbnails.

According to the disclosure, that said thumbnail is obtained by:

- downsizing at least one frame of a set of reference frames, according to a predetermined downsizing parameter, delivering a set of reference downsized frames;
- gray scaling said frames of set of reference downsized frames;
- compressing said frames of set of reference downsized frames using a lightweight algorithm;

According to the disclosure, said step for comparing said at least one piece of a reference frame with said a piece of image comprised inside said pattern comprises:

- undistorting said piece of image comprised inside said pattern;
- rectifying said piece of image comprised inside said pattern for obtaining a fixed size image;
- performing a comparison of said fixed size image with said at least one piece of a reference frame, by using a normalized cross correlation, delivering said matching score.

In another aspect, the disclosure also relates to a device for determining a pose estimation of a camera in an environment including a display for moving pictures, said device comprising at least one processor, wherein the at least one processor is configured to implement any method previously disclosed.

According to the disclosure, said at least one processor is configured for:

- temporally synchronizing reference frames corresponding to at least part of at least some of multiple displayed frames displayed on said display, delivering a latency time;
- detecting a predetermined pattern from images of said displayed frames captured with said camera by shooting said display, as a function of said latency time, delivering an initial localization; and
- tracking (30) said localization from correlating at time steps image data and said reference frames, as a function of a previously determined localization.

The disclosure also relates to a mobile apparatus comprising a camera. According to the disclosure, said apparatus further comprises a device for determining a localization as previously disclosed.

In another embodiment, the disclosure also relates to a device for real-time localization of display in an environment including a display for moving pictures, said device comprising at least one processor, in which the at least one processor is configured to implement any method as previously exposed.

According to another aspect, the disclosure refers to a device comprising a processor configured for

- Obtaining a latency time by temporally synchronizing (10) reference frames corresponding to at least part of at least some of multiple displayed frames displayed on said display,
- Obtaining an initial localization by detecting (20) a predetermined pattern from images of said displayed frames captured with said camera by shooting said display, as a function of said latency time; and
- tracking (30) said localization from correlating at time steps image data and said reference frames, as a function of a previously determined localization.

The device is further advantageously configured for carrying out a method for determining a localization of a device in any of its above execution modes.

The disclosure is also relevant to a mobile apparatus comprising a camera, and further comprising a device for determining a localization of a device as mentioned above.

## 4. Short description of the drawings

- figure 1 is a schematic block diagram illustrating the method for localizing a device based on display;
- figure 2 illustrates a system for carrying out the method;
- figure 3 illustrates an embodiment of the method;
- figure 4 illustrates a device for implementing the disclosed method.

## 5. Description

### 5.1. General principle

As previously explained, the general principle of the invention consists in ensuring the synchronization, the detection and the tracking of reference data which are displayed on a content display device and obtained (shot) by a camera of a user. Previously, reference data were obtained using static templates which were positioned in the shooting area of the camera: the static templates were shot by the camera giving reference data in the frames shot by the camera, thus leading, by a computational process, to an estimation of the camera pose (usually as a function of the planar surface of the static templates).

According to the present disclosure, reference data are obtained from video frames which are displayed on a display device: the video frames obtained from the display device are synchronized and compared to video frames obtained from a reference device (for example a set top box) which is able to control a content source and process frames accordingly to the present disclosure. The computational process first consists in ensuring synchronization of these reference data which are called reference frames.

Thus, thanks to this technique, it is possible to precisely estimate the localization of the camera without needing any static template, in a continuous way. This leads to a better service rendered by the various applications that may need a later estimation of a pose of a camera, because the user is not required to install any additional component. This also leads to better results in dark or shadowed conditions since it is supposed that the camera shoot (at least partially) a display device which emits light. Thus even in dark, the proposed solution ensures that sufficient light is present in order to allow at least a partially capture of the pictures by the shooting camera.

Generally speaking, for the processing device (called D1) the method consists in: firstly ensuring a synchronization between the data obtained from the reference device (called D0, which is for example a STB): the synchronization gives a latency time, this latency time can be seen as the necessary time for the reference data to be:

- transmitted from the reference device D0 to the display device (D2);
- displayed by the display device (D2);
- captured by the camera (C) of a user device (D3) if the user device is distinct from the processing device;
- processed by the processing device (D1).

As a function of the embodiments, the synchronization process can be more or less facilitated. Once synchronized, the method consists in secondly, detecting, by the processing device (D1), in the image data (Ic) obtained from the camera (C) a predetermined pattern (for example a rectangle or a part of the image itself if the image contains enough visual features), this pattern being inserted by the reference device (D0), so as to allow detecting, inside the image delimited by this pattern, a known reference image (which has been transmitted by the reference device directly to the processing device): this is facilitated by the fact that the time delay between what is received directly from the reference device D0 and what is obtained and processed from the camera (C) is known thanks to the previous synchronization step; so when the processing device D1 recognize the pattern, he also knows that the frame in which he detected the pattern corresponds to a specific reference frame received directly from the reference device. Thus, the comparison between the reference data received from the reference device and the image data obtained from the camera is facilitated. From the difference of the reference frame (received from the reference device) and the corresponding captured frame (obtained from the camera), it is thus possible to estimate a pose of the camera relatively to the display device (D2) and thus to enter into a third phase which is a tracking phase and which consists in implementing a tracking algorithm for estimating a transformation matrix.

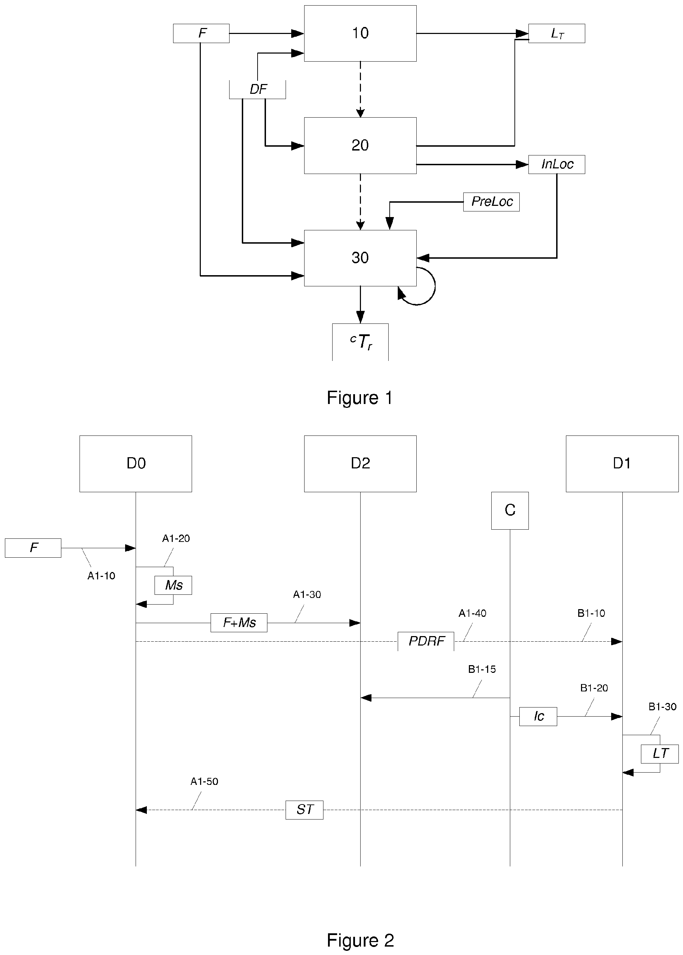

As exposed in Fig. 1, it is disclosed a method for determining a localization of a camera in an environment including a display for moving pictures. The method comprises:

- temporally synchronizing (10) reference frames (F) corresponding to at least part of at least some of multiple displayed frames (DF) displayed on said display, delivering a latency time ($L_T$);
- detecting (20) a predetermined pattern (PP) from images of said displayed frames captured with said camera by shooting said display, as a function of said latency time, delivering an initial localization (InLoc); and
- tracking (30) said localization from correlating at time steps image data of said displayed frames (DF) captured with said camera by shooting said display and said reference frames (F), as a function of a previously determined localization (PreLoc, InLoc).

Figure 2 exposes the main steps of the synchronization procedure of the proposed technique. It is disclosed a method for determining a localization of a camera (C) in an environment including a display for moving pictures (D2): the display can be a TV, a projector projecting on a wall, a computer screen, etc. The synchronizing phase globally comprises, at the level of the reference device (D0):

- fetching (A1-10) reference frames (F) corresponding to at least some of multiple displayed frames to display on said display device (D2);
- embedding (A1-20) said reference frames (F) with markers (Ms), so that the reference frames, to display by the display device (D2), and acquired by said camera (C), comprise the markers;
- transmitting (A1-30) embedded reference frames (F+Ms) to said display device (D2);
- transmitting (A1-40) at least one piece of data regarding said reference frames (PDRF) to said processing device (D1); the pieces of data are for example frame rates and/or timestamps associated to frame numbers (along with frame numbers);
- obtaining (A1-50) a state (ST) of the processing device (D1) as a function of a detection result of said markers within said frame by said processing device (D2).

The synchronizing phase globally comprises, at the level of the processing device (D1):

- obtaining (B1-10) at least one piece of data regarding said reference frames (PDRF) from said reference device (D0);
- obtaining (B1-20) image data (Ic) from images of embedded reference frames (F) displayed by said display device (D2) and captured (B1-15) with said camera (C) by shooting said display device (D2);
- temporally synchronizing (B1-30) image data (Ic) with said at least one piece of data regarding said reference frames (PDRF) so as to determine a latency time (LT) between a frame obtained from image data (Ic) and a corresponding frame obtained from said reference device (D0).

Once the latency time between the frames (Image data (Ic) and data regarding said reference frames received from device D0) is determined (which means that the processing device (D1) is synchronized), the processing device (D1) switches to a next state, which is called a *"processing state"* and informs the reference device (D0) of this state change.

Once the reference device is informed of this state change (i.e. switch to the *"processing state"*), it optionally process some reference frames and optionally transmit an updated version of the reference frames to the processing device D1, which receives them. The processing device (D1), once it has received (and/or processed) the reference frames from the reference device (D0), switches to a *"detection state"* and informs the reference device (D0) of this state change. An alternative consists in simply transmitting some reference frames, without any processing for transmitting the original version of the reference frames.

In the *"detection state"*, the processing device D1 detects a predetermined pattern (for example a rectangle or any), in the image data (Ic), and inside the pattern, identifies a known reference frame (previously transmitted by the reference device) from which he will estimate a first, initial, pose estimation.

Thus, the principles of the method comprise shooting (at least partially) a device on which reference frames of a video are displayed. In the same time, reference frames are transmitted to a device. Using the reference frames which are received and the reference frames which are captured (shooted), detection and tracking are done, the tracking comprising pose estimation of the camera (C) within the space. Globally the pose estimation process consists in aligning, geometrically and temporally, the received referenced frames and the captured referenced frames. Thanks to these two alignments (or synchronizations) the pose of the camera is estimated. The proposed method allows obtaining a pose estimation, this pose being used to locate objects, for example in augmented reality scenes. The display which is shot by the camera is, according to a global situation, a part of fixed display panel in said environment (for example a TV or a computer screen display). The display panel may also be part of a display set, comprising the display and another device, such as a set top box. In such a situation, the reference frames may be obtained directly from the set top box. In a specific embodiment, the set top box in itself may be able to process the proposed method. In another embodiment, the camera may be included in a user device (smartphone, pad), and the proposed method may be directly processed by this user device. The user device is then in charge of receiving the reference frames and to determine the pose of the user's device camera in view of the reference frames and the captured frames. According to the disclosure, obtaining reference frames may be done in several ways: the first one consists in receiving the reference frames as and when they are transmitted (or displayed) by the display device; this is the case, for example, of a so called "streaming" transmission of the frames to be displayed to a set top box (case of a broadcast for example). A second case may consist in storing the frames (e.g. the movie, the TV show, etc.) and receiving timestamps of the reference frames: the device already has the frames and it receives the information relative to the frames which are (to be) displayed, so that it can process these frames accordingly. A mix of the two previous cases is also possible. The point is that the device which implements the method has to have sufficient information for correlating (in time and in space) image data and reference frames. Additionally, the pose estimation may have several forms: it may comprise a rigid transformation of one image to one other; it may also comprise a discrete (time) transformation.

In other words, the method comprises receiving said reference frames from a telecommunication transmission medium, receiving said image data from said camera, determining said pose estimation with at least one processor and outputting data associated with said pose estimation for providing a user of said camera with information generated partly from said data associated with said pose estimation.

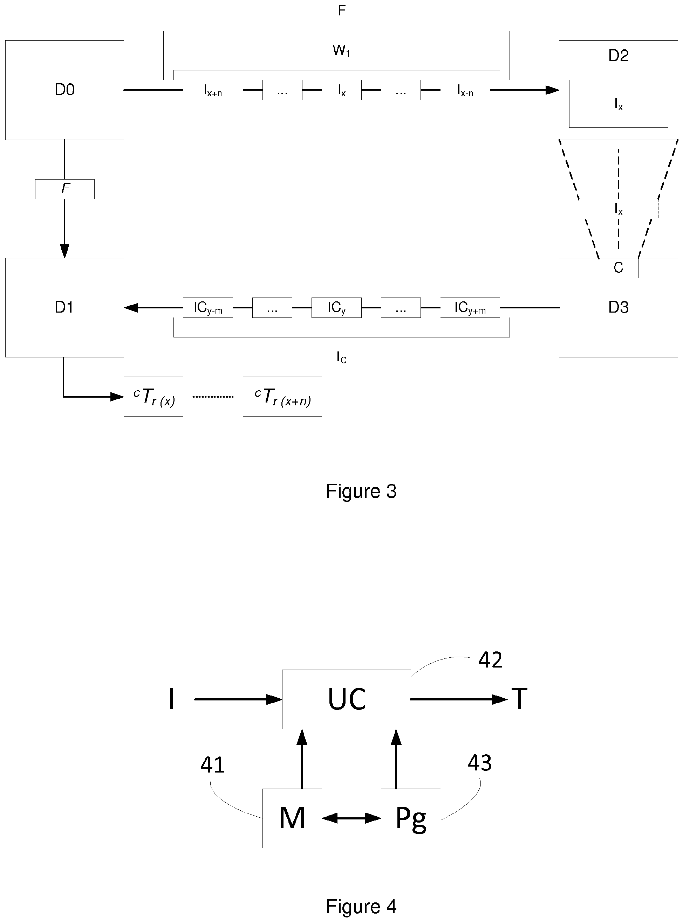

Figure 3 discloses an embodiment of a system in which the proposed technique may be implemented. For clarity, the same references than in figure 1 have been kept. A device $D0$ is connected to a display panel $D2$ and controls a video playback on this display panel. $D0$ has knowledge about the video for at least a time window $W_1$ before and after the currently displayed frame on $D2$ (note that $D0$ may be directly integrated into $D2$). Let's define $I$, the video, as an array of frames indexed by the frame timestamp.

A user's device $D3$ (such as glasses or a tab, smartphone, AR helmet - for Augmented Reality, etc.) is connected to a processing device $D1$ ($D3$ may be the same unit than $D1$ or integrated into $D1$). $D0$ and $D1$, $D3$ and $D1$ are connected through a high bandwidth/low latency connection (for example a wireless one).

Whenever asked (means during detection and tracking states of processing device D1), $D0$ sends to $D1$ a set of frames $F(I_{x-n}, ... I_{x+n})$ covering the current time window $W_1$:

$$F = I[t] \; \forall \, t \, \in W_1$$

$W_1$ is large enough to consider the latency between the display and the tracking process: the purpose is to be sure that - at any time - one of the frames in $F$ is the one displayed on $D2$. As exposed herein before, $W_1$ is adapted as a function of the synchronization: the latency time previously exposed is used for determining $W_1$.

D2 is (at least partially) filmed by the camera (C) of D3, which transmits images data $I_c$ (a set of frames $Ic_{y-m}, ... Ic_{y+m}$) to the device D1.

According to the disclosure, after the synchronization, D1, the localization of the camera within the environment is determined firstly in the detection state (initial pose of the camera is determined during this step, i.e. initial transformation matrix $^cT_{r(0)}$), and secondly in the tracking state. In the tracking state, processing device D1, has information about the tracking result at the previous time step. The tracking result is a geometrical transformation between the camera $C$ (contained by $D3$, and $D1$, when D1 and D3 are in fact a sole device) and D2. It also has information about the starting and finishing times of the previous camera shutter opening (the time is for example defined by the capture video frames timestamps, or the capture video frame rate).

Using this previous time information and knowledge about the camera shutter (typically the frame rate of the captured images), one can roughly deduce a time window $W_2$ contained in $W_1$ :

$$card(W_1) \geq card(W_2) \text{ or } card(W_1) >> card(W_2), \text{ de-}$$
pending on implementation.

Knowing $W_2$, $F$ and the images $I_c$ acquired by the camera (which are image data), the proposed technique estimates the relative transformation $^cT_r$, where $\mathcal{F}_r$ is the display panel geometric frame.

Various embodiments of the proposed technique may be implemented. In the following a specific embodiment is presented. In this embodiment, it is assumed that the camera pose is known for the previous time step (basically, that the transformation $^cT_r$ is known for the previous iteration, i.e. that $^cT_{r(n-1)}$ is known).

In this embodiment, the global system is considered to be initialized. The proposed technique also assumes that the previous time step pose is relatively close to the current time step pose. Initialization is not covered by the proposed technique: that means that the proposed technique is not used, in the same way, for determining $^cT_{r(0)}$, the first transformation.

However, according to the disclosure, the initialization (i.e the obtaining of the first transformation), may be done by using additional data coming both from the camera and the reference frames. Hence, it is proposed to initialize the system with help of the audio stream which is captured along with the captured frames and with the sound which is included in or aside the reference frame. The technique consists in, before the processing applied to the frame, processing the audio stream to obtain the necessary information for coarsely estimating the time at which the capture is done. According to the proposed technique, the audio stream in watermarked, so that estimating the time at which the capture is done only necessitates to periodically find the watermark in the audio stream.

According to the disclosure, in specific embodiments, the reference frames (and consequently captured frames) are watermarked. The initialization of the system can also be done by using the watermarked frames, just like audio streams. Advantageously, the watermark technique has two main features: the first one is to be sufficiently resistant for being captured by the camera; the second one is that it evolves in time: that means that, for example, knowing the watermark allows knowing to which frame (or group of frames) it is referenced to. This second feature allows speeding up the pose estimation process, since recognizing the watermark, both in the reference frames and in the captured frames implies that it is easier to timely map these frames, thus, once the frames are timely mapped, the pose estimation may be found by using a geometric transformation.

Considering the previously presented system, the main steps of the proposed technique for detection and tracking are the following:

In a first step, reference frames (F) are obtained; reference frames belong to a set of reference frame and extend on a given period of time ($W_1$);

In a second step, captured frames (Id) are obtained; captured frames belong to a set of captured frames and extend on a given period of time ($W_2$), where $W_2$ is smaller than $W_1$. According to a specific embodiment, one camera frame is acquired to compute one transformation. W2 is a subset of W1 refined using camera information. It limits the set of reference frames which are of interest.

In a third step, a correlation is made between reference frames (F) and capture frames ($I_C$) so as to determine a transformation $^cT_{r(n)}$; this transformation being calculated, in the tracking state, as a function of a previously obtained transformation ($^cT_{r(n-1)}$). In the detection state, the transformation $^cT_{r(0)}$ is determined using a predetermined pattern of the reference frames displayed by the display device D2 (the predetermined pattern can be added for the purpose of the detection or can be a part of the image itself if the image contains enough visual features for achieving the detection).

Thus, thanks to the proposed technique, the method allows transforming the captured frames obtained by the camera so as to match the reference frames which are obtained by another channel. Matching the two allows finding a transformation which may then be used to render additional digital content in a mixed reality scene: for example, this transformation may be use to change the appearance of a digital object in the scene; the digital object is then correctly oriented in view of the transformation applied on this object.

Following this general description, a specific embodiment is disclosed. It has to be understood however, that this specific embodiment does not limit the scope of the disclosure and that the determination of the transformation may be obtained differently in view of specific implementation conditions and parameters.

## 5.2. Description of an embodiment

A set top box is used as the reference device D0 and is connected to a video streaming service which is the source V. Frames are obtained over the network and buffered to ensure the frame timing constraint is respected. Reference device D0 also buffers the incoming images once they are sent to processing device D1 (that may be an augmented reality device, such a smartphone, a tablet, or any other device with augmented reality capabilities) to make sure they are retrieved before displaying them on the display device D2. Reference device D0 is connected to the display device D2 through a video cable. Reference device D0 is connected to D1 through a Wi-Fi link and communicate through a TCP/IP connection. Processing device D1 may be a mobile device with an integrated camera C. The images are acquired using a dedicated chip and an associated timestamp is registered for each image (This is the time code for the shutter opening instant). In this embodiment, only the luminance plane of the YUV acquired image is processed by the computer vision algorithm.

### 5.2.1. Video source

Let's consider the displayed content as a sequential set *S* of image frames numbered with a given policy. The set of displayed frames comes from a data source *V*. A reference device D0 (Set Top Box) obtains the content from *V* when needed. The exact data source type and obtaining method is not important as long as the video framerate is correctly respected.

A video is known to have a framerate of *f* frames per second. If a frame with sequential index *n_0* is displayed at time *t_0* (in seconds), then a frame displayed at time *t_1* is the one with sequential index:

$$n\_1 = n\_0 + (t\_1 - t\_0) * f$$

Any typical video player will be compliant with this constraint.

### 5.2.2. Video device (Reference Device D0): Set Top Box

Reference device *D0* performs a set of successive steps on the obtained images. It first stores the obtained image on a buffer *H1*. The obtained images are processed by Reference device D0 to be compatible with the system requirements. One objective of this processing, in this embodiment, is to reduce the network strain and to reduce the processing requirements on the embedded processing device D1. The result of this processing is sent (or made available) to the device D1.

Images stored in H1 are used once it is sure that D1 received (or is able to obtain) associated information. Images stored in H1 are then post-processed by Reference device D0 to modify their content dynamically and sent to the content display D2.

5.2.3. Augmented reality device (processing device D1)

The processing device D1 obtains images (frames) from it's camera C. Each obtained frame I is processed by processing device D1 using a computer vision algorithm and a set of reference frames R. The set R is built such that I is a function of at least one of R's images. The set R is built using images from a buffer H2 filled with images coming from Reference device D0. The dynamic creation of the set R leverages the concept of synchronization between processing device D1 and content display D2 and their respective clocks.

The processing device D1 continuously communicate with the reference device D0 to describe its state and reference device D0 adapt its behavior given this information. The reference device D0 will consider at least four states of the processing device D1:

- a playing state, when reference device D0 is inactive (regarding the processing device D1) it's a starting state, unessential regarding the current technique;
- a synchronization state that allows initializing a synchronization when needed;
- a detection state that enable to initialize the pose estimation when no prior information is available (first pose estimation) and thus first localization determination;
- a tracking state which is the normal state for augmented reality for instance: in this step, the position (localization) is updated in view of small movements made by the camera, and the augmented reality or mixed reality content is processed.

5.2.4. Synchronization

In this embodiment, synchronization is preferably done each time the streaming acquisition is restarted. When this happens, reference device D0 informs the processing device D1 that synchronization is lost. The processing device D1 then changes its state to synchronization mode. The reference device D0 also transmits to the processing device D1 information about the displayed content (at least the video frame rate).

In this state the reference device D0 overlays the video with a visual fiducial marker. The visual content of this marker encodes a piece of data related to a frame number (or the like). Thanks to the timing constraint, this frame number piece of data may be considered as a measure of a virtual clock aligned with the display device D2.

The processing device D1 detects this fiducial marker, in the images coming from the camera C, Decoding the marker will give back the "frame number" k and the acquired camera image's timestamp t. Once this marker has been detected a given number of incoming images, the bias b between the processing device D1's clock (e.g. C1) and the "virtual" clock (C0) is estimated by minimizing:

$$argmin\ n_0 + (t_1 - b) * f - k$$

Once this value is estimated and optionally validated over several other images, the processing device D1 assumes that the synchronization process is done and that it is now able to predict the displayed frames. Note that the estimation drift over time may be leveraged by displaying a synchronization marker from time to time.

The processing device D1 then changes its state to detection mode.

5.2.5. Processing

In the other modes than the synchronization mode and playing mode, the reference device D0 preprocess the images before sending them to the processing device D1. In this implementation, the streamed video is converted to grayscale, downscaled from 1080p to a 192x128 image and finally compressed using a lightweight algorithm. While in synchronization mode, no reference image is sent to the processing device D1 (only the frame rate, coming from the reference data, indicating which frame is played at which timestamp, i.e. the frame number of associated with the time stamp). So, the processing state is not a state of the processing device D1, but more a state of the reference device D0, which continuously process frames (and optionally adapt these frames (size reduction, gray scale) so as to facilitate the detection and tracking by the processing device D1.

5.2.6. Detection

In detection mode, Reference device D0 overlays the video with additional content to reduce the detection problem search space. In an embodiment, the video is framed with a constant color thick rectangle.

The processing device D1 will look in the acquired images for large closed quadrilaterals. For each detected quadrilateral, and for each possible 4 rotations, the region inside the quadrilateral is rectified and undistorted. This is possible because we consider that the region inside the quadrilateral is a planar region with known parameters. The result image is a 96x64 grayscale image.

The processing device D1 knows the currently displayed frame number. The processing device D1 extracts from H2 the correct reference frame and compares it with the rectified observed content. The comparison is performed using a normalized cross correlation. Thanks to the small size of the rectified image, this solution is tolerant to small errors in the homography estimation. The quadrilateral with the best score, if it superior to a threshold, is chosen. The four corners of the quadrilateral are used to compute the pose of the camera using a classical pose from 4 points method.

The detection state is kept until a good score is found. Once found, the state is set to Tracking mode.

5.2.7. Tracking

When the processing device D1's state is set to Tracking, this means that the camera was correctly localized in the previous frame. Thanks to the relatively fast frame rate of the camera, and the limited motion of the mobile device in an indoor environment, the current location should be very similar to the previous one. Note that the previous location may be given by the detection process.

As in the detection process, the reference images are needed. Given the current device timestamp, the displayed frame number is known. The set R is made of the associated frame and the next one (on the time scale) to consider the possible acquisition of multiple displayed reference images during the same shutter opening.

The tracking algorithm is described in a previous patent application.

On each image, the result is a 4x4 homogeneous matrix $^cT_r$. Using this pose, the camera's acquired image may be rectified and undistorted and compared with the reference image. If the score is inferior to a threshold, the tracking is considered to have failed and the processing device D1's state falls back to detection.

5.3. Device for estimating the localization of the camera

The disclosure also proposes a device for estimating the localization in an environment. The device can be specifically designed for localization estimation or any electronic device comprising non-transitory computer readable medium and at least one processor configured by computer readable instructions stored in the non-transitory computer readable medium to implement any method in the disclosure.

According to an embodiment shown in figure 4, the device for estimating the localization in an environment includes a Central Processing Unit (CPU) 42, a Random Access Memory (RAM) 41, a Read-Only Memory (ROM) 43, a storage device which are connected via a bus in such a manner that they can carry out communication among them.

The CPU controls the entirety of the device by executing a program loaded in the RAM. The CPU also performs various functions by executing a program(s) (or an application(s)) loaded in the RAM.

The RAM stores various sorts of data and/or a program(s).

The ROM also stores various sorts of data and/or a program(s) (Pg).

The storage device, such as a hard disk drive, a SD card, a USB memory and so forth, also stores various sorts of data and/or a program(s).

The device performs the method for estimating the localization in an environment as a result of the CPU executing instructions written in a program(s) loaded in the RAM, the program(s) being read out from the ROM or the storage device and loaded in the RAM.

More specifically, the device can be a server, a computer, a pad, a smartphone or a camera in itself. The device comprises at least one input adapted for receiving the reference frames, at least one further input adapted to receiving the image data (e.g. the captured frames), the processor(s) for estimating the localization of the camera, and at least one output adapted to outputting the data associated with the localization estimation. The generated information is advantageously synchronized with the displayed frames for augmented reality, with a view to e.g. advertisement, second screen complements or games, but can also be disconnected from the displayed video.

The disclosure also relates to a computer program product comprising computer executable program code recorded on a computer readable non-transitory storage medium, the computer executable program code when executed, performing the method for estimating the localization in an environment. The computer program product can be recorded on a CD, a hard disk, a flash memory or any other suitable computer readable medium. It can also be downloaded from the Internet and installed in a device so as to estimate the localization in an environment as previously exposed.

**Claims**

1. Method for determining a localization of a camera in an environment including a display for moving pictures, **characterized in that** said method comprises:

   - Obtaining a latency time by temporally synchronizing (10) reference frames corresponding to at least part of at least some of multiple displayed frames displayed on said display,
   - Obtaining an initial localization by detecting (20) a predetermined pattern from images of said displayed frames captured with said camera by shooting said display, as a function of said latency time; and
   - tracking (30) said localization from correlating at time steps image data (Ic) from images of said displayed frames captured with said camera by shooting said display and said reference frames, as a function of a previously determined localization.

**2.** The method according to claim 1, **characterized in that** said localization of said camera is obtained by applying a rigid transformation to images of said displayed frames captured with said camera by shooting said display.

**3.** The method according to claim 1, **characterized in that** said localization is combined with watermarking at least one of said reference frames.

**4.** The method according to claim 1, **characterized in that** said temporally synchronizing (10) reference frames corresponding to at least part of at least some of multiple displayed frames displayed on said display comprises:

- obtaining at least a piece of data representing reference frame numbers associated with said reference frames;
- determining, from images of said displayed frames captured with said camera by shooting said display, shot frame numbers;
- obtaining said latency time as a function of reference frame numbers and shot frame numbers.

**5.** The method according to claim 4, **characterized in that** obtaining said latency time comprises minimizing:

$$arg\,min\; n_0 + (t_1 - b) * f - k$$

Where

- $n_0$ represents the number of a reference frame;
- $k$ is the shot frame number;
- $t_1$ is the timestamp at which said frame is captured by the camera;
- $f$ if the framerate of the content being displayed on said display;
- $b$ is the estimated value of the latency time.

**6.** The method according to any of claims 1 to 5, **characterized in that** said pattern takes the form of a color thick rectangle overlaying frames displayed on said display.

**7.** The method according to any of claims 1 to 6, **characterized in that** detecting (20) a predetermined pattern from images of said displayed frames captured with said camera by shooting said display comprises, for a current image of said images of said displayed frames captured with said camera :

- seeking at least one predetermined pattern in said current image;
- extracting, in said current image, a piece of image comprised inside said pattern;
- determining said frame number of said current image;
- obtaining at least one piece of a reference frame associated with said frame number;
- comparing said at least one piece of a reference frame with said a piece of image comprised inside said pattern, delivering a matching score; and
- when said matching score exceeds a predetermined threshold, determining said initial localization of said camera within said environment.

**8.** The method according to claim 7, **characterized in that** said step for obtaining at least one piece of a reference frame associated with said frame number comprise obtaining, in a buffer memory, a thumbnail of a reference frame tagged for said frame number.

**9.** The method according to claim 8, **characterized in that** said thumbnail is obtained by:

- downsizing at least one frame of a set of reference frames, according to a predetermined downsizing parameter, delivering a set of reference downsized frames (Is);
- gray scaling said frames of set of reference downsized frames (Is);
- compressing said frames of set of reference downsized frames (Is) using a lightweight algorithm;

**10.** The method according to claim 7, **characterized in that** said step for comparing said at least one piece of a reference frame with said a piece of image comprised inside said predetermined pattern comprises:

- undistorting said piece of image comprised inside said pattern;
- rectifying said piece of image comprised inside said pattern for obtaining a fixed size image;
- performing a comparison of said fixed size image with said at least one piece of a reference frame, by using a normalized cross correlation, delivering said matching score.

**11.** A device (D1) for determining a pose estimation of a camera (C) in an environment including a display (D2) for moving pictures, said device comprising at least one processor, wherein the at least one processor is configured to implement any method according to claims 1 to 11.

**12.** A device (D1) comprising a processor configured for

- Obtaining a latency time by temporally synchronizing (10) reference frames corresponding to at least part of at least some of multiple displayed frames displayed on said display,

- Obtaining an initial localization by detecting (20) a predetermined pattern from images of said displayed frames captured with said camera by shooting said display, as a function of said latency time; and

- tracking (30) said localization from correlating at time steps image data and said reference frames, as a function of a previously determined localization.

**13.** A mobile apparatus comprising a camera, **characterized in that** said apparatus further comprises a device (D1) for determining a pose estimation according to claim 12 or 13.

**14.** A computer program product comprising computer executable program code recorded on a computer readable non-transitory storage medium, the computer executable program code when executed, performing any method according to claims 1 to 11.

Figure 1

Figure 2

F

W$_1$

D0

I$_{x+n}$ — ... — I$_x$ — ... — I$_{x-n}$

D2

I$_x$

F

I$_x$

C

D1

IC$_{y-m}$ — ... — IC$_y$ — ... — IC$_{y+m}$

D3

I$_C$

$^cT_{r\,(x)}$ ---------- $^cT_{r\,(x+n)}$

Figure 3

I → UC → T

42

41    M ↔ Pg    43

Figure 4

Europäisches
Patentamt

European
Patent Office

Office européen
des brevets

# EUROPEAN SEARCH REPORT

Application Number

EP 17 30 6722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAUL ACUNA ET AL: "Dynamic Markers: UAV landing proof of concept", ARXIV.ORG, CORNELL UNIVERSITY LIBRARY, 201 OLIN LIBRARY CORNELL UNIVERSITY ITHACA, NY 14853, 14 September 2017 (2017-09-14), XP080821311, | 1-3,6, 10-14 | INV. G06T7/73 G06T7/20 |
| A | * abstract * * section II. D. System delays analysis; figures 1,5,9 * | 4,5,7-9 | |

-----

TECHNICAL FIELDS
SEARCHED     (IPC)

G06T

The present search report has been drawn up for all claims

| Place of search | Date of completion of the search | Examiner |
|---|---|---|
| Munich | 7 June 2018 | Tillier, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................
& : member of the same patent family, corresponding
    document

EPO FORM 1503 03.82 (P04C01)